# EUROPEAN PATENT SPECIFICATION

(11) **EP 3 970 931 B1**
(45) Date of publication and mention of the grant of the patent: **29.10.2025**
(21) Application number: 20306072.8
(22) Date of filing: 21.09.2020
(51) Int. Cl.: B28B 17/00, B28B 19/00, B28B 5/02, G01B 11/02, G01B 11/06, G01B 11/28, G06T 7/00

(54) **A CONSTRUCTION SLURRY SPREAD QUANTIFICATION SYSTEM AND METHOD**
SYSTEM UND VERFAHREN ZUR QUANTIFIZIERUNG DER BAUSCHLÄMMEAUSBREITUNG
SYSTÈME ET PROCÉDÉ DE QUANTIFICATION D'ÉTALEMENT DE BOUILLIE DE CONSTRUCTION

(43) Date of publication of application: 23.03.2022
(73) Proprietor: SAINT-GOBAIN PLACO, 92400 Courbevoie (FR)
(72) Inventor: Cantonnet, Jerome, 92400 Courbevoie (FR); Ranzani da Costa, Andrea, 92400 Courbevoie (FR); Coquelin, Samuel, 92400 Courbevoie (FR); Jaffel, Hamouda, 92400 Courbevoie (FR)
(74) Representative: Murgitroyd & Company

(56) References cited:
- CN-A- 110 238 955
- CN-A- 110 788 965
- CN-U- 203 381 031
- JP-A- H09 109 120
- JP-B2- 3 278 992
- US-A1- 2020 269 439
- US-B2- 10 421 251

## Description

### Field of the Invention

The present invention relates to a construction slurry spread quantification system and method and finds particular, although not exclusive, utility in providing a stucco slurry spread quantification system capable of identifying a characteristic of a stucco slurry spread.

### Background of the Invention

Lightweight construction panels, such as plasterboard, (e.g. gypsum plasterboard) are commonly used to provide internal partitions in buildings. To provide a partition, it is typical to first construct a framework from wood, metal, or another suitable material, and affix sheets of plasterboard to the frame with screws or other fixings to provide a continuous partition surface. It is also known to affix said panels to solid walls, such as brick walls, to provide a more desirable finished surface. Said panels are typically used to construct walls and ceilings. Plasterboard is typically formed from a stucco slurry. Stucco and other additives are typically combined with water to form the slurry, which is then dried at elevated temperatures to form plasterboard.

Typically, the stucco slurry is mixed and conveyed to a plasterboard forming table. A forming table conventionally includes slurry outlets that spread the slurry on to a moving sheet of paper. Another sheet of paper is provided from above and is applied to the slurry by a forming head that presses the paper onto the slurry and sets the thickness of the plasterboard. The plasterboard then typically travels along a production line away from the forming table to be cured, cut and distributed. Alternatively, other suitable materials could be used instead of paper sheets - for example one or both paper sheets could be replaced with glass fibre mats.

It is desirable to provide consistency in both the properties of the slurry and the forming process so that the variability of the plasterboard produced is reduced. It is known to analyse the rheological properties of the stucco slurry via a slump test, wherein the rheology of the stucco slurry is tested by measuring a slump shape and/or subsidence of a cone-shaped volume of slurry after a support is removed. Slump tests may be undertaken every 2 hours.

However, although the slump test may provide, indirectly, some indication of the rheological properties of the stucco slurry, it does not provide any indication of a quality of the spread of the stucco slurry on the forming table of a plasterboard production line. Furthermore, the slump test is undertaken offline, which means that the result of the slump test may not be able to provide an indication of real-time process fluctuations.

It is also important to note that the results of any offline slump test relate to a static stucco slurry under no shear stress. However, on a plasterboard production line, the stucco slurry will be flowing from a mixer and, therefore, will be experiencing a level of shear stress. The influence of this shear stress on the observed rheology of the stucco slurry is not accounted for in offline slump tests. In addition, the offline slump test remains a qualitative method to assess the rheology of the stucco slurry, and the results of the offline tests are often observed to be operator dependent, reducing their reliability.

Typically, the quality of the stucco slurry spread on a plasterboard production line is estimated visually. Although operators may be trained to identify undesirable slurry spread characteristics visually, it is difficult to notice small changes in the slurry spread. Therefore, quality may drift unnoticed over time. Furthermore, different operators observing the stucco slurry spread may result in inconsistencies.

Accordingly, it is desirable to provide a slurry spread analysis or quantification system that is not susceptible to the above mentioned problems.

CN 110788965 relates to an automatic production system for hard edge gypsum boards.

JP 3278992 relates to an orientation control unit for screening wire cloth part in paper machine.

CN 110238955 relates to a gypsum board production line.

CN 203381031 relates to a slurry height control device and a slurry accumulation device.

JP H09 109120 A discloses a construction slurry spread quantification system according to the preamble of claim 1 and a corresponding method according to the preamble of claim 8.

Objects and aspects of the present invention seek to alleviate at least these problems with prior known analysis systems and methods.

### Summary of the Invention

According to a first aspect of the present invention, there is provided a construction slurry spread quantification system comprising: a forming table including a forming area; at least one slurry outlet configured to, in use, dispense a slurry into the forming area; a sensor configured to be trained on the forming area and configured to capture an image of the forming area; and a processor operable to: analyse the image to identify the slurry; determine at least one characteristic of the slurry; and output at least one indication of the at least one characteristic of the slurry, wherein the analysis of the image to identify the slurry includes analysing one or more of a shape, a colour, a contrast and/or a brightness of at least a portion of the image; and the at least one characteristic of the slurry includes one or more of an area, a shape, a width, a velocity and/or a rheological property; wherein the system comprises a mixer configured to mix ingredients to form the slurry and provide the slurry to the at least one slurry outlet and/or a forming table vibration system, and wherein the processor is further configured to control operation of the mixer and/or the forming table vibration system; wherein in response to the at least one indication falling outside of a predetermined acceptable range the processor is configured to change at least one operation of the forming table vibration system and/or operation of the mixer; characterised in that the processor is configured to: identify a desired change in the at least one characteristic; consult a predetermined list of mixer operation changes and/or forming table vibration system operation changes and corresponding changes in the at least one characteristic; identify a predetermined mixer operation change and/or a predetermined forming table vibration system operation change which causes a corresponding change in the at least one characteristic that is similar to the desired change in the at least one characteristic; and change at least one operation of the mixer according to the identified predetermined mixer operation change and/or change at least one operation of the forming table vibration system according to the identified predetermined forming table vibration system operation change, and wherein the at least one operation of the mixer changed, is selected from the group consisting of: altering the composition of the slurry entering the mixer, altering the composition of slurry within the mixer, altering the density of a foam entering the mixer, altering the density of a foam before it enters the slurry that enters the mixer, and altering the speed of a rotor within the mixer.

A key advantage of the present invention is that a characteristic of the slurry may be obtained immediately or shortly after the slurry has been spread. Accordingly, an undesirable spread may be identified based on the characteristic and corrected. Furthermore, use of the present invention may improve board quality. In particular, the present invention may be used to identify voids and other faults such as empty edge boards. Determining the characteristic of the slurry may also be useful in optimising the slurry composition, for example by reducing the water content of a slurry to reduce drying time and the energy consumption associated with the drying process.

Preferably, the image is 1-dimensional. Alternatively, the image is 2-dimensional. Alternatively, the image is 3-dimensional. Where the characteristic to be determined from the image can be obtained from a 1-dimensional image, the image may be 1-dimensional, 2-dimensional or 3-dimensional. Where the image is 1-dimensional, it is preferred that the image would be captured along a line perpendicular to the direction of movement of a sheet on to which the slurry is dispensed. Where the characteristic to be determined from the image can be obtained from a 2-dimensional image, the image may be 2-dimensional or 3-dimensional. Where the image is 2-dimensional, it is preferred that the image would be captured in a plane parallel to or perpendicular to the direction of movement of a sheet onto which the slurry is dispensed.

The slurry is a construction slurry. A construction slurry may a slurry that is suitable for forming into a construction panel, such as plasterboard, cement board, or other board or panel used in the construction field. The slurry may be a stucco slurry, which is typically used in the manufacture of plasterboard. Plasterboard may also be known as drywall, wallboard, sheet rock, gypsum board or similar. Stucco slurry typically comprises water and stucco. Additionally, stucco slurry may comprise one or more additives, such as starch, glass fibres, or other components known to provide beneficial properties to the plasterboard product. To form plasterboard, the stucco in the stucco slurry may be hydrated and form a gypsum matrix. Stucco slurry may not comprise cementitious material. During the manufacture of plasterboard, stucco slurry is typically spread onto a first sheet of paper, before a second sheet of paper is positioned on the stucco slurry. The present invention may be used to determine a characteristic of the stucco slurry spread before the second sheet of paper is positioned. Alternatively, other suitable materials could be used instead of paper sheets - for example one or both paper sheets could be replaced with glass fibre mats.

The forming table may be an apparatus used to support the medium on to which the slurry is being spread. The forming table may be a plasterboard forming table. Accordingly, the medium may be paper, glass fibre mats or other suitable sheet materials. The forming table may be used during a continuous production process. The forming area is an area or a portion of the forming table into or on to which the slurry outlet is configured to dispense slurry.

The slurry outlet may comprise a plurality of outlet apertures. Each of the outlet apertures may be configured to dispense slurry into a different portion of the forming area to each of the other outlet apertures. Additionally, each of the outlet apertures may be configured to dispense slurry with a different composition.

A roller and/or extruder may be provided in the forming area to further spread the slurry. A desirable spread may be a spread which covers a predetermined area of the medium onto which the slurry is spread before and/or after the slurry is further spread by the roller and/or extruder.

The sensor may comprise a visual light camera, an infrared light camera, an ultraviolet light camera and/or a laser sensor. In some instances, the slurry may be a similar colour to the medium onto which the slurry is spread. Accordingly, the processor may not be able to differentiate the slurry from the medium if the sensor is a visual light camera. However, in said instances, the processor may be able to differentiate the slurry from the medium if the sensor comprises an infrared light camera, an ultraviolet camera and/or a laser sensor. As such, the choice of sensor may depend on inherent characteristics of the slurry and/or medium onto which the slurry is spread. The sensor may comprise an emitter configured to cooperate with the visual light camera, the infrared light camera, the ultraviolet camera and/or the laser sensor. For example, the sensor may comprise a visible white light emitter and a visual light camera.

The analysis of the image to identify the slurry includes analysing one or more of a shape, a colour, a contrast and/or a brightness of at least a portion of the image. In this way, the processor may be able to differentiate between the slurry and the medium onto which the slurry is spread. The processor may be configured to compare data acquired, in use, by the sensor with a predetermined dataset including data corresponding to allowable slurry spreads. Accordingly, the processor may be operable to identify an undesirable slurry spread. The image analysis may be carried out offline and/or online.

The processor may take, as an input from a user or otherwise, a field of the image which is to be analysed, an area of the image including slurry only, an area of the image including only the medium onto which the slurry is spread, and/or a field corresponding to the slurry outlet. The processor is configured to identify the slurry and the medium onto which the slurry is spread within the field of the image that is to be analysed. The processor is configured to record slurry characteristics, such as colour or brightness. If the slurry outlet includes two or more outlet apertures, the processor may be configured to identify a joining point at which slurry from a first outlet aperture meets slurry from a second outlet aperture. The processor may be configured to split the image along a line passing between two outlet apertures and the joining point. Alternatively, and/or additionally, the processor may be configured to split the image into two or more image portions along a length of the forming area. The processor may be configured to calculate a slurry coverage ratio or percentage for each image portion. The processor may be configured to output the calculated ratios.

The at least one characteristic of the slurry includes one or more of an area, a shape, a width, a height, a velocity and/or a rheological property. In an embodiment described but not claimed, the at least one characteristic of the slurry may include a depth. For example, when producing plasterboard, a consistent area of slurry within a region of interest, a consistent shape, a consistent width, and a slurry with consistent rheological properties are all desirable. An inconsistency in the characteristic may be indicative of an undesirable slurry spread.

The processor may be configured to analyse the image with pixel characterisation to identify the slurry. The sensor may be configured to capture an image including a plurality of pixels. The processor may be configured to compare one or more pixels with one or more other pixels. Each pixel or cluster of pixels may be characterised into a group with other pixels determined to be similar. A first group of pixels may be attributed to the slurry and a second group of pixels may be attributed to the medium onto which the slurry is spread. A third group of pixels, and/or pixels not characterised into the first group or the second group, may be attributed to an inclusion and/or other foreign object.

The sensor may be configured to provide a continuous image feed. The processor may be configured to provide a continuously updating output. In this way, the at least one indication of the characteristic of the slurry may be output, and the slurry spread may be monitored, continuously. As such, fluctuations in the characteristic may be monitored and minimised. For example, a drift in the characteristic may indicate a drift in the rheological properties or the composition of the slurry.

The system comprises a mixer. The mixer is configured to mix ingredients to form the slurry. The mixer may be configured to provide the slurry to the at least one slurry outlet. The system may comprise a forming table vibration system. The processor is further configured to control operation of the mixer and/or to control operation of the forming table vibration system. The processor is configured to change at least one operation of the mixer and/or at least one operation of the forming table vibration system in response to the at least one indication falling outside of a predetermined acceptable range. In this way, the system may automatically correct an identified undesirable characteristic of the slurry spread.

Controlling operation of the mixer includes at least one of altering the composition of the slurry entering the mixer, altering the composition of slurry within the mixer, altering the density of a foam entering the mixer, altering the density of a foam before it enters the slurry that enters the mixer, and altering the speed of a rotor within the mixer.

Preferably, controlling operation of the forming table vibration system may include, but is not limited to, altering the frequency of vibrations and/or altering the amplitude of vibrations.

Any envisaged alteration may be made alone or in combination with any number of additional alterations.

The processor may be configured to effect a continuous change in operation of the mixer and/or the forming table vibration system. A continuous change may be a gradual change. A continuous change may mean that the processor does not effect a significant change in operation of the mixer and/or the forming table vibration system in a relatively short time. Significant changes in operation of the mixer and/or forming table vibration system may be effected over a relatively long time. Accordingly, the processor may not cause a significant change in the characteristic of the slurry spread in a relatively short time.

The processor may be configured to calculate a sum of or average of the at least one indication over a predetermined time period. The processor may be configured to change operation of the mixer and/or the forming table vibration system in response to the sum of or average of the at least one indication over the predetermined time period falling outside of a predetermined acceptable range. Accordingly, a one off or otherwise isolated undesirable characteristic identification may not result in a change in operation. The average may be the mean, median or mode of the at least one indication.

The processor is configured to identify a desired change in the at least one characteristic. The processor is configured to consult a predetermined list of mixer operation changes and/or forming table vibration system operation changes and corresponding changes in the at least one characteristic. The processor is configured to identify a predetermined mixer operation change and/or a predetermined forming table vibration system operation change which causes a corresponding change in the at least one characteristic that is similar to the desired change in the at least one characteristic. The processor is configured to change at least one operation of the mixer according to the identified predetermined mixer operation change and/or change at least one operation of the forming table vibration system according to the identified predetermined forming table vibration system operation change. The processor may be configured to carry out each of the above steps in order to improve or otherwise change the operation of the mixer and/or the forming table vibration system in order to produce a more desirable slurry spread. In this way, the processor may be configured to automatically correct an identified at least one characteristic.

An upper and/or lower threshold value may be provided for the acceptable level of the indication of the at least one characteristic of the slurry. Operation of the mixer and/or the forming table vibration system may be changed if the value exceeds or falls below the upper or the lower threshold value respectively. Fluctuation within the predetermined acceptable threshold values may not effect a change in operation. A tolerance may be applied to predetermined acceptable values.

The system may be configured to alter an amount of water, a fluidizer, a retarder, an accelerator, stucco, and/or other additives or ingredients within the slurry. A predetermined range may be provided for acceptable range of values of each ingredient. The system may be configured to change operation of the mixer by changing the amount of any or each ingredient within its predetermined acceptable range of values.

There may be a delay between changing operation of the mixer and/or the forming table vibration system and detecting the results of change in operation. Accordingly, the system may not make a second change to the operation of the mixer and/or the forming table vibration system immediately or within a specified time period after a first change to the operation of the mixer and/or the forming table vibration system.

The processor may be configured to amend the predetermined list of mixer operation changes and/or forming table vibration system operation changes to add new entries including mixer operation changes and/or forming table vibration system operation changes and corresponding changes in the at least one characteristic identified through use of the system. The processor may be configured to delete entries which include mixer operation changes and/or forming table vibration system operation changes where the measured corresponding change in the at least one characteristic differs from the corresponding change in the at least one characteristic included in the predetermined list. In this way, the processor may be configured to learn and improve operation of the system through use.

Analysis steps described herein may form part of a neural network. The neural network may be periodically retrained. The retraining may comprise manual or user amendment of the predetermined list of mixer operation changes. Alternatively and/or additionally, the analysis steps described herein may form part of a machine learning, regression fitting and/or deep learning process.

The system may be in communication with at least one other slurry spread quantification system. Each slurry spread quantification system may make use of a single predetermined list of mixer operation changes and/or forming table vibration system operation changes. Accordingly, the neural network may extend to a plurality of slurry spread quantification systems. In this way, the operation of the systems may be refined more quickly and/or more extensively. The plurality of slurry spread quantification systems may be arranged, in use, in a single geographic region. Ingredients may differ in each geographic region. Accordingly, an identified change in mixer operation and/or forming table vibration system operation in one geographic region may not be applicable to another geographic region.

The processor may be configured to analyse a first portion of the image separately from a second portion of the image. The first portion may be a first half of the image and the second portion may be a second half of the image. The first and second halves may be longitudinal halves. Accordingly, the two halves may be separated by a line running centrally along the forming area away from the slurry outlet.

The processor may be configured to analyse a third portion of the image separately from the first and second portions. It is to be appreciated that the processor may be configured to analyse any number of separate portions.

The processor may be configured to compare the at least one characteristic of the first portion to the at least one characteristic of the second portion to identify a difference between the first portion and the second portion. The at least one identifier may include a value related to the identified difference between the first portion and the second portion. The processor may be configured to identify a symmetry between the first portion and the second portion. The processor may be configured to output a value indicative of the identified symmetry.

The system may find particular utility in the testing and analysis of new slurry outlet designs. For example, the system may be used as a tool for quantifying different slurry outlet spout designs during research and development. The system may be used to quantify an amount of slurry exiting each of the slurry outlet spouts. The system may be used to optimize the slurry outlet geometries to improve the slurry spread on the forming table. Furthermore, the system may be used to optimize forming table designs.

The system may further comprise a display. The display may be configured to display the at least one indication of the at least one characteristic of the slurry. The display may be configured to display historical indications of the at least one characteristic of the slurry. The display may be configured to display changes made to the operation of the mixer.

According to a second aspect of the present invention, there is provided a method for quantifying a slurry spread with the construction slurry spread quantification system of the first aspect of the present invention, the method is set out in Claim 8.

Preferably, the slurry is identified by differentiating it from the medium on to which the slurry is spread.

According to a third aspect of the present invention, there is provided a computer implemented method for controlling a system according to the first aspect of the present invention.

According to a fourth aspect of the present invention, there is provided at least one non-transitory computer readable storage medium comprising instructions, that when executed on a computing device cause the computing device to control a system according to the first aspect of the present invention.

It is to be understood that each and/or any feature and/or advantage associated with the first aspect of the present invention may also be included and/or apply to each and/or any of the second, third and fourth aspects of the present invention.

### Detailed Description

An embodiment of the present invention will now be described by way of example only and with reference to the accompanying drawings, in which:
Figure 1 is a schematic plan view of stucco slurry spreading apparatus; and
Figure 2 is a schematic side view of the stucco slurry spreading apparatus shown in Figure 1 along with a slurry spread quantification system.

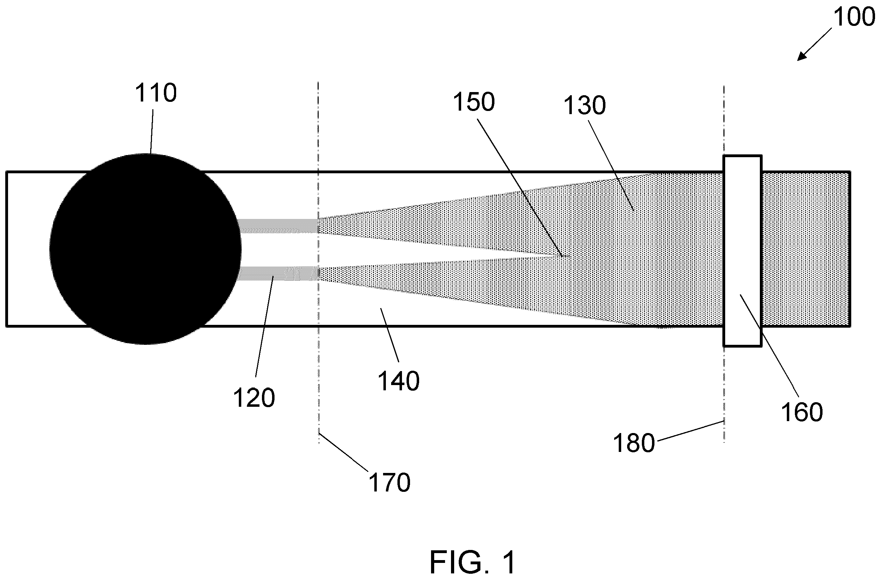

Figure 1 is a schematic plan view of stucco slurry spreading apparatus 100. The apparatus 100 includes a mixer 110 configured to mix ingredients into a slurry. The mixer 110 includes two slurry outlets 120 configured to dispense slurry 130 onto a moving sheet of paper 140. Other numbers of slurry outlets 120 are envisaged. The paper 140 moves away from the mixer 110, from left to right in the view shown in Figure 1, and forms one surface of the final plasterboard product. The mixer 110 may be a continuous mixer such that ingredients are continually or periodically introduced into the mixer and slurry is continually dispensed from the mixer 110.

Due to the inherent viscosity of the slurry 130, the slurry 130 flattens and spreads over time on the paper 140. Accordingly, the area of the slurry 130, seen from the plan view as shown in Figure 1, increases as it moves away from the mixer 110 and has more time to spread when compared to slurry 130 that has more recently been dispensed.

The slurry 130 from each of the two slurry outlets 120 eventually spreads enough to meet the slurry of the other slurry outlet 130 at a meet point 150. The slurry from each of the two slurry outlets 120 then forms a single slurry 130 mass that continues to spread over the paper 140 and increase in area, in the view shown in Figure 1.

The slurry 130 may have a non-uniform depth or other undesirable spread characteristic. The slurry 130 and paper 140 pass through or by an extruder 160, which is configured to flatten the slurry 130 to a uniform and predetermined depth corresponding to the desired thickness of the plasterboard product.

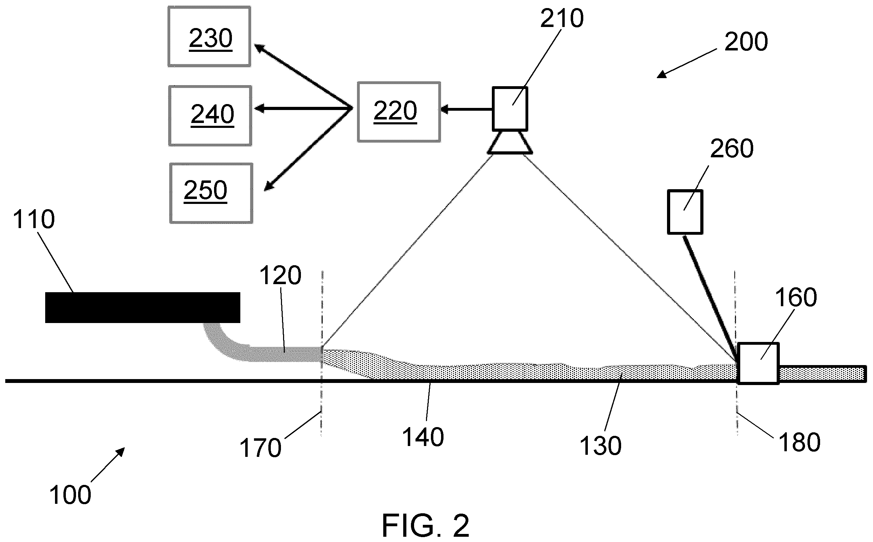

The slurry 130 characteristics and the slurry 130 spread characteristics in the region between the slurry outlets 120 and the extruder 160 may be of interest. Accordingly, a slurry spread quantification system, as shown in Figure 2, may be provided to analyse the slurry 130 in the region bounded by lines 170, 180 aligned with outlet apertures of the two slurry outlets 120 and the entrance to the extruder 160 respectively. However, it is also envisaged that slurry 130 spread characteristics in the region downstream of the extruder 160 may be of interest. In such embodiments, the extruder 160 is located within the forming area.

Figure 2 is a schematic side view of the stucco slurry spreading apparatus 100 shown in Figure 1 along with a slurry spread quantification system 200. The slurry spread quantification system 200 includes a camera 210 configured to capture a video feed of the slurry 130 and paper 140 between the lines 170, 180 bounding the region of interest. The camera 210 is configured to provide the video feed to a processor 220.

The processor 220 is configured to analyse the video feed from the camera 210 to determine a characteristic of the slurry 130 and/or a characteristic of the slurry 130 spread. For example, the processor 220 may be configured to determine an area of the slurry 130 and an area of the paper 140 within the region of interest, and output a value corresponding to the percentage of the paper 140 that is covered by the slurry 130. Other characteristics are envisaged.

The processor 220 may be configured to carry out a number of analysis steps in order to provide the value corresponding to the percentage of the paper 140 that is covered by the slurry 130. The processor 220 may be configured to receive, as an input from a user, a field of the video related to a region of interest, a field of the video including paper 140 only, a field of the video including slurry 130 only, and a field of the video related to the slurry outlets 120. The field of the video related to the slurry outlets 120 may be a field of the video that has a width equal to the width of the slurry outlets 120 and a length which is sufficient to include the meet point (not shown in Figure 2).

The processor 220 may then, via pixel characterisation or any other analysis technique, determine areas within the field of the video related to the region of interest that corresponds to the paper 140 and to the slurry 130. If pixel characterisation is used, the processor 220 may identify pixels which are similar to the pixels within the field of the video including slurry 130 only and determine said pixels include slurry, and identify pixels which are similar to the pixels within the field of the video including paper 140 only and determine said pixels include paper. The processor 220 may then be able to calculate a total percentage area, within the region of interest, of the paper 140 that is covered by slurry 130.

In addition, the processor 220 may be configured to split the video feed images into portions and analyse each portion separately. Each image may be split into two halves, along a line bisecting the two slurry outlets 120 and the meet point (not shown in Figure 2), and a symmetry between the two halves assessed.

The processor 220 is configured to provide information, such as the value corresponding to the percentage of the paper 140 that is covered by the slurry 130, to a display 230. The display 230 may show the information in a graph or otherwise.

The processor 220 is also configured to provide information, such as the value corresponding to the percentage of the paper 140 that is covered by the slurry 130, to an automation system 240. The automation system 240 may control operation of the mixer 110 as described above. The automation system 240 may control operation of the mixer 110 in response to the information provided by the processor 220. For example, if the area of the paper 140 covered by the slurry 130 is lower than a predetermined acceptable range, the mixer 110 may be operated to add more water and/or fluidizer to the slurry to decrease viscosity.

The processor 220 is also configured to provide information, such as the value corresponding to the percentage of the paper 140 that is covered by the slurry 130, to a supervision system 250. The supervision system 250 may allow a user to supervise production.

A laser sensor 260 is also provided and is configured to measure a spread characteristic, such as a depth, of the slurry 130 at the entrance to the extruder 160. The laser sensor 260 may provide measurements or other information to the processor 220.

## Claims

1. A construction slurry spread quantification system (200) comprising:
a forming table including a forming area;
at least one slurry outlet (120) configured to, in use, dispense a slurry (130) into the forming area;
a sensor configured to be trained on the forming area and configured to capture an image of the forming area; and
a processor (220) operable to:
analyse the image to identify the slurry (130);
determine at least one characteristic of the slurry (130); and
output at least one indication of the at least one characteristic of the slurry (130);
wherein the analysis of the image to identify the slurry (130) includes analysing one or more of a shape, a colour, a contrast and/or a brightness of at least a portion of the image; and
the at least one characteristic of the slurry (130) includes one or more of an area, a shape, a width, a velocity and/or a rheological property;
wherein the system comprises a mixer (110) configured to mix ingredients to form the slurry (130) and provide the slurry (130) to the at least one slurry outlet (120) and/or a forming table vibration system, and wherein the processor (220) is further configured to control operation of the mixer (110) and/or the forming table vibration system;
wherein in response to the at least one indication falling outside of a predetermined acceptable range the processor (220) is configured to change at least one operation of the forming table vibration system and/or operation of the mixer (110);
**characterised in that** the processor (220) is configured to:
identify a desired change in the at least one characteristic;
consult a predetermined list of mixer operation changes and/or forming table vibration system operation changes and corresponding changes in the at least one characteristic;
identify a predetermined mixer operation change and/or a predetermined forming table vibration system operation change which causes a corresponding change in the at least one characteristic that is similar to the desired change in the at least one characteristic; and
change at least one operation of the mixer (110) according to the identified predetermined mixer operation change and/or change at least one operation of the forming table vibration system according to the identified predetermined forming table vibration system operation change; and
wherein the at least one operation of the mixer (110) changed, is selected from the group consisting of: altering the composition of the slurry entering the mixer (110), altering the composition of slurry within the mixer (110), altering the density of a foam entering the mixer (110), altering the density of a foam before it enters the slurry that enters the mixer (110), and altering the speed of a rotor within the mixer (110).

2. The construction slurry spread quantification system (200) of any preceding claim, wherein the sensor is configured to provide a continuous image feed, and the processor (220) is configured to provide a continuously updating output.

3. The construction slurry spread quantification system (200) of claim 1 or claim 2, wherein the processor (220) is configured to effect a continuous change in operation of the mixer (110) and/or the forming table vibration system.

4. The construction slurry spread quantification system (200) of claim 1, claim 2 or claim 3, wherein the processor (220) is configured to calculate a sum of or average of the at least one indication over a predetermined time period and change operation of the mixer (110) and/or the forming table vibration system in response to the sum of or average of the at least one indication over the predetermined time period falling outside of a predetermined acceptable range.

5. The construction slurry spread quantification system (200) of any preceding claim, wherein the processor (220) is configured to amend the predetermined list of mixer operation changes and/or the predetermined list of forming table vibration system operation changes to add new entries including mixer operation changes and/or forming table vibration system operation changes and corresponding changes in the at least one characteristic identified through use of the system, and/or delete entries which include mixer operation changes and/or forming table vibration system operation changes where the measured corresponding change in the at least one characteristic differs from the corresponding change in the at least one characteristic included in the predetermined list.

6. The construction slurry spread quantification system (200) of any preceding claim, wherein the processor (220) is configured to analyse a first portion of the image separately from a second portion of the image.

7. The construction slurry spread quantification system (200) of claim 6, wherein the processor (220) is configured to compare the at least one characteristic of the first portion to the at least one characteristic of the second portion to identify a difference between the first portion and the second portion, and at least one identifier including a value related to the identified difference between the first portion and the second portion.

8. A method for quantifying a slurry spread with the construction slurry spread quantification system (200) of any preceding claim, the method comprising the steps:
dispensing slurry (130) into the forming area;
capturing, by the sensor, an image of the forming area;
analysing, by the processor (220), the image to identify the slurry (130);
determining, by the processor (220), at least one characteristic of the slurry (130); and
outputting, by the processor (220), at least one indication of the at least one characteristic of the slurry (130)
wherein the step of analysing the image to identify the slurry (130) includes analysing one or more of a shape, a colour, a contrast and/or a brightness of at least a portion of the image; and
the at least one characteristic of the slurry (130) includes one or more of an area, a shape, a width, a velocity and/or a rheological property;
mixing, by the mixer (110), ingredients to form the slurry (130) and provide the slurry (130) to the at least one slurry outlet (120) and/or a forming table vibration system, and controlling, by the processor (220), the operation of the mixer (110) and/or the forming table vibration system;
changing, by the processor (220), at least one operation of the forming table vibration system and/or operation of the mixer (110) in response to the at least one indication falling outside of a predetermined acceptable range;
**characterised in that** the method further comprises the processor (220):
identifying a desired change in the at least one characteristic;
consulting a predetermined list of mixer operation changes and/or forming table vibration system operation changes and corresponding changes in the at least one characteristic;
identifying a predetermined mixer operation change and/or a predetermined forming table vibration system operation change which causes a corresponding change in the at least one characteristic that is similar to the desired change in the at least one characteristic; and
changing at least one operation of the mixer (110) according to the identified predetermined mixer operation change and/or changing at least one operation of the forming table vibration system according to the identified predetermined forming table vibration system operation change; and
wherein the at least one operation of the mixer (110) changed, is selected from the group consisting of: altering the composition of the slurry entering the mixer (110), altering the composition of slurry within the mixer (110), altering the density of a foam entering the mixer (110), altering the density of a foam before it enters the slurry that enters the mixer (110), and altering the speed of a rotor within the mixer (110).

9. Computer implemented method for controlling a system (200) according to any of claims 1 to 7.

10. At least one non-transitory computer readable storage medium comprising instructions, that when executed on a computing device cause the computing device to control a system (200) according to any of claims 1 to 7.

## Patentansprüche

1. Verteilungsquantifizierungssystem (200) für Bauschlämme, das Folgendes beinhaltet:
einen Formtisch, der einen Formbereich umfasst;
mindestens einen Schlämmeauslass (120), der dazu konfiguriert ist, im Gebrauch einen Schlamm (130) in den Formbereich abzugeben;
einen Sensor, der dazu konfiguriert ist, auf den Formbereich trainiert zu werden, und dazu konfiguriert ist, ein Bild des Formbereichs aufzunehmen; und
einen Prozessor (220), der zu Folgendem betreibbar ist:
Analysieren des Bildes, um den Schlamm (130) zu identifizieren;
Bestimmen mindestens eines Charakteristikums des Schlamms (130); und
Ausgeben mindestens einer Angabe des mindestens einen Charakteristikums des Schlamms (130);
wobei die Analyse des Bildes, um den Schlamm (130) zu identifizieren, das Analysieren von einem oder mehreren von einer Form, einer Farbe, einem Kontrast und/oder einer Helligkeit von mindestens einem Teil des Bildes umfasst; und
das mindestens eine Charakteristikum des Schlamms (130) eines oder mehrere von einem Bereich, einer Form, einer Breite, einer Geschwindigkeit und/oder einer rheologischen Eigenschaft umfasst;
wobei das System einen Mischer (110) beinhaltet, der dazu konfiguriert ist, Zutaten zu mischen, um den Schlamm (130) zu bilden und den Schlamm (130) dem mindestens einen Schlämmeauslass (120) und/oder einem Formtischvibrationssystem bereitzustellen, und wobei der Prozessor (220) ferner dazu konfiguriert ist, den Betrieb des Mischers (110) und/oder des Formtischvibrationssystems zu steuern;
wobei als Reaktion darauf, dass die mindestens eine Angabe außerhalb einer vorbestimmten akzeptablen Spanne fällt, der Prozessor (220) dazu konfiguriert ist, mindestens einen Betrieb des Formtischvibrationssystems und/oder Betrieb des Mischers (110) zu ändern;
**dadurch gekennzeichnet, dass** der Prozessor (220) zu Folgendem konfiguriert ist:
Identifizieren einer gewünschten Änderung des mindestens einen Charakteristikums;
Konsultieren einer vorbestimmten Liste von Mischerbetriebsänderungen und/oder Formtischvibrationssystembetriebsänderungen und entsprechenden Änderungen des mindestens einen Charakteristikums;
Identifizieren einer vorbestimmten Mischerbetriebsänderung und/oder einer vorbestimmten Formtischvibrationssystembetriebsänderung, die eine entsprechende Änderung des mindestens einen Charakteristikums verursacht, die der gewünschten Änderung des mindestens einen Charakteristikums ähnlich ist; und
Ändern mindestens eines Betriebs des Mischers (110) gemäß der identifizierten vorbestimmten Mischerbetriebsänderung und/oder Ändern mindestens eines Betriebs des Formtischvibrationssystems gemäß der identifizierten vorbestimmten Formtischvibrationssystembetriebsänderung; und
wobei der mindestens eine Betrieb des Mischers (110), der geändert wird, aus der Gruppe ausgewählt ist, die aus Folgendem besteht: Verändern der Zusammensetzung des Schlamms, der in den Mischer (110) eintritt, Verändern der Zusammensetzung des Schlamms innerhalb des Mischers (110), Verändern der Dichte eines Schaums, der in den Mischer (110) eintritt, Verändern der Dichte eines Schaums, bevor er in den Schlamm eintritt, der in den Mischer (110) eintritt, und Verändern der Drehzahl eines Rotors innerhalb des Mischers (110).

2. Verteilungsquantifizierungssystem (200) für Bauschlämme gemäß einem der vorhergehenden Patentansprüche, wobei der Sensor dazu konfiguriert ist, eine kontinuierliche Bildeinspeisung bereitzustellen, und der Prozessor (220) dazu konfiguriert ist, eine kontinuierlich aktualisierende Ausgabe bereitzustellen.

3. Verteilungsquantifizierungssystem (200) für Bauschlämme gemäß Anspruch 1 oder Anspruch 2, wobei der Prozessor (220) dazu konfiguriert ist, eine kontinuierliche Änderung des Betriebs des Mischers (110) und/oder des Formtischvibrationssystems zu bewirken.

4. Verteilungsquantifizierungssystem (200) für Bauschlämme gemäß Anspruch 1, Anspruch 2 oder Anspruch 3, wobei der Prozessor (220) dazu konfiguriert ist, eine Summe oder einen Mittelwert der mindestens einen Angabe über einen vorbestimmten Zeitraum zu berechnen und den Betrieb des Mischers (110) und/oder des Formtischvibrationssystems als Reaktion darauf zu ändern, dass die Summe oder der Mittelwert der mindestens einen Angabe über den vorbestimmten Zeitraum außerhalb einer vorbestimmten akzeptablen Spanne fällt.

5. Verteilungsquantifizierungssystem (200) für Bauschlämme gemäß einem der vorhergehenden Ansprüche, wobei der Prozessor (220) dazu konfiguriert ist, die vorbestimmte Liste von Mischerbetriebsänderungen und/oder die vorbestimmte Liste von Formtischvibrationssystembetriebsänderungen zu korrigieren, um neue Einträge hinzuzufügen, die Mischerbetriebsänderungen und/oder Formtischvibrationssystembetriebsänderungen und entsprechende Änderungen des mindestens einen Charakteristikums umfassen, das durch den Gebrauch des Systems identifiziert wurde, und/oder Einträge zu löschen, die Mischerbetriebsänderungen und/oder Formtischvibrationssystembetriebsänderungen umfassen, wobei sich die gemessene entsprechende Änderung des mindestens einen Charakteristikums von der entsprechenden Änderung des mindestens einen Charakteristikums unterscheidet, das in der vorbestimmten Liste umfasst ist.

6. Verteilungsquantifizierungssystem (200) für Bauschlämme gemäß einem der vorhergehenden Ansprüche, wobei der Prozessor (220) dazu konfiguriert ist, einen ersten Teil des Bildes getrennt von einem zweiten Teil des Bildes zu analysieren.

7. Verteilungsquantifizierungssystem (200) für Bauschlämme gemäß Anspruch 6, wobei der Prozessor (220) dazu konfiguriert ist, das mindestens eine Charakteristikum des ersten Teils mit dem mindestens einen Charakteristikum des zweiten Teils zu vergleichen, um eine Differenz zwischen dem ersten Teil und dem zweiten Teil und mindestens eine Kennung, die einen Wert umfasst, der sich auf die identifizierte Differenz zwischen dem ersten Teil und dem zweiten Teil bezieht, zu identifizieren.

8. Verfahren zum Quantifizieren einer Verteilung eines Schlamms mit dem Verteilungsquantifizierungssystem (200) für Bauschlämme gemäß einem der vorhergehenden Ansprüche, wobei das Verfahren die folgenden Schritte beinhaltet:
Abgeben von Schlamm (130) in den Formbereich;
Aufnehmen eines Bildes des Formbereichs durch den Sensor;
Analysieren des Bildes durch den Prozessor (220), um den Schlamm (130) zu identifizieren;
Bestimmen mindestens eines Charakteristikums des Schlamms (130) durch den Prozessor (220); und
Ausgeben mindestens einer Angabe des mindestens einen Charakteristikums des Schlamms (130) durch den Prozessor (220),
wobei der Schritt des Analysierens des Bildes, um den Schlamm (130) zu identifizieren, das Analysieren von einem oder mehreren von einer Form, einer Farbe, einem Kontrast und/oder einer Helligkeit von mindestens einem Teil des Bildes umfasst; und
das mindestens eine Charakteristikum des Schlamms (130) eines oder mehrere von einem Bereich, einer Form, einer Breite, einer Geschwindigkeit und/oder einer rheologischen Eigenschaft umfasst;
Mischen von Zutaten durch den Mischer (110), um den Schlamm (130) zu bilden und den Schlamm (130) dem mindestens einen Schlämmeauslass (120) und/oder einem Formtischvibrationssystem bereitzustellen, und Steuern des Betriebs des Mischers (110) und/oder des Formtischvibrationssystems durch den Prozessor (220);
Ändern mindestens eines Betriebs des Formtischvibrationssystems und/oder des Betriebs des Mischers (110) durch den Prozessor (220) als Reaktion darauf, dass die mindestens eine Angabe außerhalb einer vorbestimmten akzeptablen Spanne fällt;
**dadurch gekennzeichnet, dass** das Verfahren ferner beinhaltet, dass der Prozessor (220):
eine gewünschte Änderung des mindestens einen Charakteristikums identifiziert;
eine vorbestimmte Liste von Mischerbetriebsänderungen und/oder Formtischvibrationssystembetriebsänderungen und entsprechenden Änderungen des mindestens einen Charakteristikums konsultiert;
eine vorbestimmte Mischerbetriebsänderung und/oder eine vorbestimmte Formtischvibrationssystembetriebsänderung identifiziert, die eine entsprechende Änderung des mindestens einen Charakteristikums verursacht, die der gewünschten Änderung des mindestens einen Charakteristikums ähnlich ist; und
mindestens einen Betrieb des Mischers (110) gemäß der identifizierten vorbestimmten Mischerbetriebsänderung ändert und/oder mindestens einen Betrieb des Formtischvibrationssystems gemäß der identifizierten vorbestimmten Formtischvibrationssystembetriebsänderung ändert; und
wobei der mindestens eine Betrieb des Mischers (110), der geändert wird, aus der Gruppe ausgewählt ist, die aus Folgendem besteht: Verändern der Zusammensetzung des Schlamms, der in den Mischer (110) eintritt, Verändern der Zusammensetzung des Schlamms innerhalb des Mischers (110), Verändern der Dichte eines Schaums, der in den Mischer (110) eintritt, Verändern der Dichte eines Schaums, bevor er in den Schlamm eintritt, der in den Mischer (110) eintritt, und Verändern der Drehzahl eines Rotors innerhalb des Mischers (110).

9. Ein computerimplementiertes Verfahren zum Steuern eines Systems (200) gemäß einem der Ansprüche 1 bis 7.

10. Mindestens ein nichtflüchtiges computerlesbares Speichermedium, das Anweisungen beinhaltet, die bei Ausführung auf einer Rechenvorrichtung verursachen, dass die Rechenvorrichtung ein System (200) gemäß einem der Ansprüche 1 bis 7 steuert.

## Revendications

1. Un système de quantification d'étalement de coulis de construction (200) comprenant :
une table de formage incluant une zone de formage ;
au moins une évacuation de coulis (120) configurée pour, en utilisation, distribuer un coulis (130) jusque dans la zone de formage ;
un capteur configuré pour être entraîné sur la zone de formage et configuré pour capturer une image de la zone de formage ; et
un processeur (220) pouvant être mis en fonctionnement pour :
analyser l'image afin d'identifier le coulis (130) ;
déterminer au moins une caractéristique du coulis (130) ; et
délivrer en sortie au moins une indication de l'au moins une caractéristique du coulis (130) ;
dans lequel l'analyse de l'image afin d'identifier le coulis (130) inclut le fait d'analyser un ou plusieurs éléments parmi une forme, une couleur, un contraste et/ou une luminosité d'au moins une portion de l'image ; et
l'au moins une caractéristique du coulis (130) inclut un ou plusieurs éléments parmi une zone, une forme, une largeur, une vitesse et/ou une propriété rhéologique ;
le système comprenant un mélangeur (110) configuré pour mélanger des ingrédients afin de former le coulis (130) et fournir le coulis (130) à l'au moins une évacuation de coulis (120) et/ou à un système de vibration de table de formage, et le processeur (220) étant configuré en outre pour commander un fonctionnement du mélangeur (110) et/ou du système de vibration de table de formage ;
dans lequel, en réponse au fait que l'au moins une indication tombe en dehors d'une plage acceptable préétablie, le processeur (220) est configuré pour changer au moins un fonctionnement du système de vibration de table de formage et/ou un fonctionnement du mélangeur (110) ;
**caractérisé en ce que** le processeur (220) est configuré pour :
identifier un changement souhaité de l'au moins une caractéristique ;
consulter une liste préétablie de changements de fonctionnement de mélangeur et/ou de changements de fonctionnement de système de vibration de table de formage et de changements correspondants de l'au moins une caractéristique ;
identifier un changement de fonctionnement de mélangeur préétabli et/ou un changement de fonctionnement de système de vibration de table de formage préétabli, lequel provoque un changement correspondant de l'au moins une caractéristique qui est similaire au changement souhaité de l'au moins une caractéristique ; et
changer au moins un fonctionnement du mélangeur (110) selon le changement de fonctionnement de mélangeur préétabli identifié et/ou changer au moins un fonctionnement du système de vibration de table de formage selon le changement de fonctionnement de système de vibration de table de formage préétabli identifié ; et
dans lequel l'au moins un fonctionnement du mélangeur (110) changé est sélectionné dans le groupe consistant en : le fait d'altérer la composition du coulis entrant dans le mélangeur (110), le fait d'altérer la composition de coulis à l'intérieur du mélangeur (110), le fait d'altérer la densité d'une mousse entrant dans le mélangeur (110), le fait d'altérer la densité d'une mousse avant qu'elle n'entre dans le coulis qui entre dans mélangeur (110), et le fait d'altérer le régime d'un rotor à l'intérieur du mélangeur (110).

2. Le système de quantification d'étalement de coulis de construction (200) de n'importe quelle revendication précédente, dans lequel le capteur est configuré pour fournir un flux d'images continu, et le processeur (220) est configuré pour fournir une sortie se mettant à jour de façon continue.

3. Le système de quantification d'étalement de coulis de construction (200) de la revendication 1 ou de la revendication 2, dans lequel le processeur (220) est configuré pour effectuer un changement continu du fonctionnement du mélangeur (110) et/ou du système de vibration de table de formage.

4. Le système de quantification d'étalement de coulis de construction (200) de la revendication 1, de la revendication 2 ou de la revendication 3, dans lequel le processeur (220) est configuré pour calculer une somme ou une moyenne de l'au moins une indication pendant un laps de temps préétabli et changer le fonctionnement du mélangeur (110) et/ou du système de vibration de table de formage en réponse au fait que la somme ou la moyenne de l'au moins une indication pendant le laps de temps préétabli tombe en dehors d'une plage acceptable préétablie.

5. Le système de quantification d'étalement de coulis de construction (200) de n'importe quelle revendication précédente, dans lequel le processeur (220) est configuré pour modifier la liste préétablie de changements de fonctionnement de mélangeur et/ou la liste préétablie de changements de fonctionnement de système de vibration de table de formage afin d'ajouter de nouvelles entrées incluant des changements de fonctionnement de mélangeur et/ou des changements de fonctionnement de système de vibration de table de formage et des changements correspondants de l'au moins une caractéristique identifiée au cours de l'utilisation du système, et/ou supprimer des entrées, lesquelles incluent des changements de fonctionnement de mélangeur et/ou des changements de fonctionnement de système de vibration de table de formage où le changement correspondant mesuré de l'au moins une caractéristique diffère du changement correspondant de l'au moins une caractéristique incluse dans la liste préétablie.

6. Le système de quantification d'étalement de coulis de construction (200) de n'importe quelle revendication précédente, dans lequel le processeur (220) est configuré pour analyser une première portion de l'image séparément d'une deuxième portion de l'image.

7. Le système de quantification d'étalement de coulis de construction (200) de la revendication 6, dans lequel le processeur (220) est configuré pour comparer l'au moins une caractéristique de la première portion à l'au moins une caractéristique de la deuxième portion afin d'identifier une différence entre la première portion et la deuxième portion, et au moins un identifiant incluant une valeur liée à la différence identifiée entre la première portion et la deuxième portion.

8. Un procédé destiné à quantifier un étalement de coulis à l'aide du système de quantification d'étalement de coulis de construction (200) de n'importe quelle revendication précédente, le procédé comprenant les étapes consistant en :
le fait de distribuer un coulis (130) jusque dans la zone de formage ;
le fait de capturer, par le capteur, une image de la zone de formage ;
le fait d'analyser, par le processeur (220), l'image afin d'identifier le coulis (130) ;
le fait de déterminer, par le processeur (220), au moins une caractéristique du coulis (130) ; et
le fait de délivrer en sortie, par le processeur (220), au moins une indication de l'au moins une caractéristique du coulis (130) ;
dans lequel l'étape consistant en le fait d'analyser l'image afin d'identifier le coulis (130) inclut le fait d'analyser un ou plusieurs éléments parmi une forme, une couleur, un contraste et/ou une luminosité d'au moins une portion de l'image ; et
l'au moins une caractéristique du coulis (130) inclut un ou plusieurs éléments parmi une zone, une forme, une largeur, une vitesse et/ou une propriété rhéologique ;
le fait de mélanger, par le mélangeur (110), des ingrédients afin de former le coulis (130) et fournir le coulis (130) à l'au moins une évacuation de coulis (120) et/ou à un système de vibration de table de formage, et le fait de commander, par le processeur (220), le fonctionnement du mélangeur (110) et/ou du système de vibration de table de formage ;
le fait de changer, par le processeur (220), au moins un fonctionnement du système de vibration de table de formage et/ou un fonctionnement du mélangeur (110) en réponse au fait que l'au moins une indication tombe en dehors d'une plage acceptable préétablie ;
**caractérisé en ce que** le procédé comprend en outre pour le processeur (220) ;
le fait d'identifier un changement souhaité de l'au moins une caractéristique ;
le fait de consulter une liste préétablie de changements de fonctionnement de mélangeur et/ou de changements de fonctionnement de système de vibration de table de formage et de changements correspondants de l'au moins une caractéristique ;
le fait d'identifier un changement de fonctionnement de mélangeur préétabli et/ou un changement de fonctionnement de système de vibration de table de formage préétabli, lequel provoque un changement correspondant de l'au moins une caractéristique qui est similaire au changement souhaité de l'au moins une caractéristique ; et
le fait de changer au moins un fonctionnement du mélangeur (110) selon le changement de fonctionnement de mélangeur préétabli identifié et/ou le fait de changer au moins un fonctionnement du système de vibration de table de formage selon le changement de fonctionnement de système de vibration de table de formage préétabli identifié ; et
dans lequel l'au moins un fonctionnement du mélangeur (110) changé est sélectionné dans le groupe consistant en : le fait d'altérer la composition du coulis entrant dans le mélangeur (110), le fait d'altérer la composition de coulis à l'intérieur du mélangeur (110), le fait d'altérer la densité d'une mousse entrant dans le mélangeur (110), le fait d'altérer la densité d'une mousse avant qu'elle n'entre dans le coulis qui entre dans mélangeur (110), et le fait d'altérer le régime d'un rotor à l'intérieur du mélangeur (110).

9. Procédé mis en œuvre par ordinateur destiné à commander un système (200) selon n'importe lesquelles des revendications 1 à 7.

10. Au moins un support de stockage non transitoire lisible par ordinateur comprenant des instructions qui, lorsqu'elles sont exécutées sur un dispositif informatique, amènent le dispositif informatique à commander un système (200) selon n'importe lesquelles des revendications 1 à 7.
